Europäisches Patentamt

(19) European Patent Office

Office européen des brevets

(11) Publication number: **0 116 918**

A2

(12) **EUROPEAN PATENT APPLICATION**

(21) Application number: **84101381.6**

(22) Date of filing: **10.02.84**

(51) Int. Cl.³: **H 01 M 10/36**
**H 01 M 2/40**

(30) Priority: **11.02.83 US 465754**

(43) Date of publication of application:
**29.08.84 Bulletin 84/35**

(84) Designated Contracting States:
**DE FR GB**

(71) Applicant: **Energy Research Corporation**
**3 Great Pasture Road**
**Danbury Connecticut 06810(US)**

(72) Inventor: **Putt, Ronald A.**
**1050 Old Mill Drive**
**Palatine Illinois 60067(US)**

(74) Representative: **Abitz, Walter, Dr.-Ing. et al,**
**Abitz, Morf, Gritschneder, Freiherr von Wittgenstein**
**Postfach 86 01 09**
**D-8000 München 86(DE)**

(54) Metal halogen cell system.

㉗ A metal halogen cell system comprising:

a halogen cell including: a negative electrode section comprising a metallic negative electrode; a positive electrode section comprising a positive halogen electrode, said positive electrode section being adapted to receive a halogen electrolyte and a halogen oil;

a reservoir for storing a halogen oil;

a circulation system which transports halogen electrolyte and halogen oil to and from said positive electrode section and communicates with said reservoir;

the portion of said positive electrode section and the portion of said circulation system which communicate with said halogen oil having lowest points which are above the lowest point of said portion of said reservoir which com- municates with said oil.

Metal Halogen Cell System

Background of the Invention

This invention relates to metal-halogen cell systems and, in particular, to metal-halogen cell systems in which a water-insoluble halogen complex, a so-called halogen oil, is used to transport halogen to and from the cell electrolyte.

Systems of this type are disclosed, for example, in U.S. patents 4,162,351 and 4,105,829. In these systems, the halogen oil is typically stored in a tank or reservoir area which communicates with the cell circulation system. The cell electrolyte is circulated through the positive electrode section of the cell by the circulation system and is contacted with the oil to effect the halogen transfer.

When a halogen cell system of the above type ceases to operate due to failure or intentional shut-down for maintenance, the oil which is within the cell drains to the oil reservoir and also to the positive electrode section areas and circulation system locations which are at levels below the reservoir. If the temperature of the cell should now be reduced below the freezing point of the oil, the oil in the reservoir and at the various cell and circulation system locations will freeze.

In order to bring the cell back into operation, the frozen oil must be returned to its liquid state by thawing. While this can be readily accomplished for the oil in the tank through permanent heating coils situated adjacent the tank, the positive electrode section and circulation system locations are not as accessible. In order to thaw the oil at these locations special apparatus such as, for example, heating tape or a hot air gun, must be applied. This requirement is disadvantageous for many applications of the cell, such

**0116918**

as utility energy storage, wherein hands-off, low maintenance operation is desired.

It is therefore an object of the present invention
to provide a halogen cell system which does not suffer from
the above-mentioned disadvantage.

## Summary of the Invention

In accordance with the principles of the present
invention, the above and other objectives are realized in a
halogen cell system utilizing a halogen oil and a reservoir
for the oil and wherein the portions of the circulation system
and the positive electrode cell section which communicate with
the oil have lowest points which are above the lowest point of
the portion of the reservoir which communicates with the
oil.

In the embodiment of the invention to be described
hereinbelow, the reservoir comprises a tank and the total
volume of oil in the system rises to a predetermined level in
the tank which level is below the lowest points of the aforementioned portions of the circulation system and positive
electrode section.

## Brief Description of the Drawings

The above and other features and aspects of the
present invention will become more apparent upon reading the
following detailed description in conjunction with accompanying drawings in which the sole drawing illustrates a halogen
cell system in accordance with the principles of the present
invention.

0116918

## Detailed Description

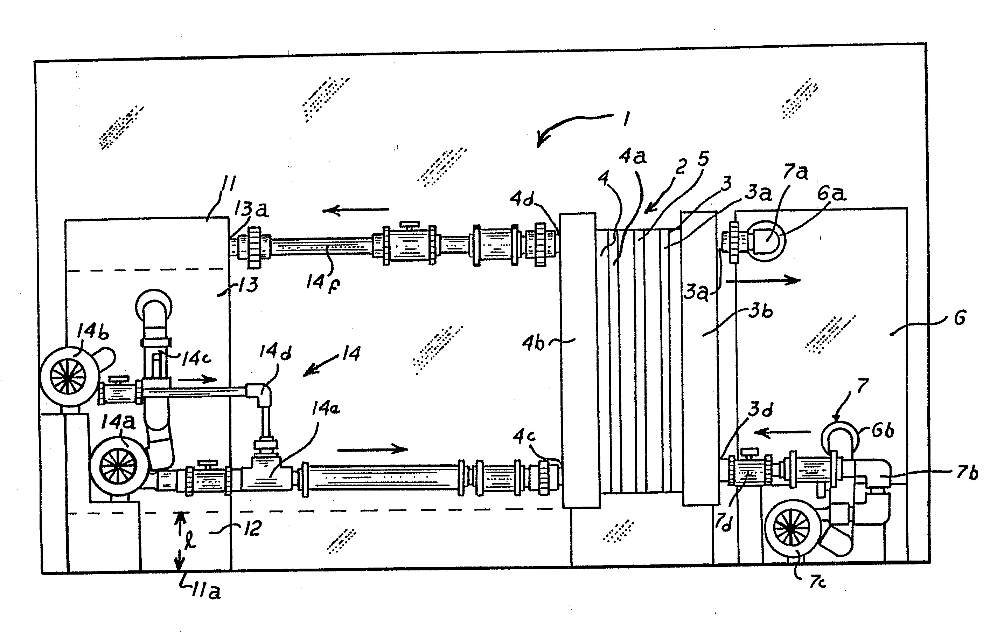

FIG. 1 shows a halogen cell system 1 which comprises a halogen cell including a cell module 2. The module 2 contains a positive electrode section 3 which includes a positive electrode 3a such as, for example, a bromine electrode and a negative electrode section 4 which includes a negative electrode 4a such as, for example, a zinc electrode. These electrodes are of conventional construction and are separated by a conventional separator 5.

Electrolyte for the negative electrode section 3 is stored in an external reservoir 6 and is carried into the section 3 via an input manifold 3b which is coupled to a circulation system 7. The system 7 includes upper and lower conduits 7a and 7b which communicate between upper ports 3c and 6a and lower ports 3d and 6b of the manifold 3b and the reservoir 6. A pump 7c is included in the conduct 7b for promoting circulation and is followed by a heat exchanger 7d also included in such conduit.

On the positive electrode side, a reservoir in the form of a tank 11 serves to contain a halogen oil 12. Typically the oil 12 may be a polybromide oil where the electrode 4a is a bromine electrode. The oil 12 fills the tank 11 to a predetermined level $l$ above the tank bottom 11a before the cell is put into operation. The tank 11 also serves to contain electrolyte 13 which fills the tank above the oil 12.

A circulation and mixing system 14 comprises pumps 14a and 14b and conduits 14c, 14d, 14e and 14f. The system 14 causes a mixing of the oil 12 and the electrolyte 13 to effect transfer of halogen therebetween. This, in turn, maintains the halogen in the electrolyte at an appropriate concentration for operation of the cell.

Mixed electrolyte and any oil is carried by the system 14 into an input port 4c of a manifold 4b of the positive electrode section 4. Return of the electrolyte and oil is through output port 4d of manifold 4b, line 14f and port 13a in the upper part of the tank 13.

In accordance with the invention, the portions of the circulation and mixing system 13 and the portions of the positive electrode section 1 which communicate with the oil 12 are situated so that their lowest points are above the lowest point of the portion of the tank 11 in communication with the oil. In the case shown, the tank bottom 11 is the lowest point of the tank in communication with the oil, so that the components of the system 13 in communication with the oil, i.e., 14a-14f, and the components of the section 4 in communication with the oil, i.e., manifold 4b, etc., are all above such bottom. In the preferred construction, these components are all above the tank level $\underline{l}$, which represents the level to which the oil 12 would rise if all the oil of the system were contained in the tank 11.

With this construction of the cell system 1, it is apparent that when the cell system becomes inoperative due to intentional shut-down or malfunction, all the oil contained in the system will drain from the positive electrode section 4 and from the circulation system 14 into the tank 11, since the level $\underline{l}$ is below the components of these elements in communication with the oil. If the temperature surrounding the system should now decrease below the freezing temperature of the oil, the oil will freeze. However, the frozen oil will be contained in a substantially single location, i.e., in the tank 11, which can be readily and automatically heated with an adjacently disposed heating coil to thaw the oil. Hands-on access to restrictive locations of the circulation system 14 and/or positive cell section 4 for applying special heating tools is thus completely unnecessary and avoided. The system configuration therefore promotes low maintenance and, hence, low cost.

In all cases, it is understood that the above-described embodiments are merely illustrative of the many possible specific embodiments which represent applications of the present invention. Numerous and varied other arrangements can readily be devised without departing from the spirit and scope of the invention. Thus, for example, while the illustrated system shows the reservoir 12 external of the cell, the principles of the invention are equally applicable where the reservoir is internal of the cell.

What I Claim Is

1.  A metal halogen cell system comprising:

a halogen cell including:  a negative electrode section comprising a metallic negative electrode; a positive electrode section comprising a positive halogen electrode, said positive electrode section being adapted to receive a halogen electrolyte and a halogen oil;

a reservoir for storing a halogen oil;

a circulation system which transports halogen electrolyte and halogen oil to and from said positive electrode section and communicates with said reservoir;

the portion of said positive electrode section and the portion of said circulation system which communicate with said halogen oil having lowest points which are above the lowest point of said portion of said reservoir which communicates with said oil.

2.  A system in accordance with claim 1 wherein:

said reservoir comprises a tank whose bottom includes said lowest point of said reservoir

said halogen oil when entirely stored in said tank rises to a predetermined level above said tank bottom;

and the lowest points of said portions of said circulation system and said positive electrode section are above said predetermined level.

3.  A system in accordance with claim 2 wherein:

said tank also serves as a reservoir for said electrolyte, said electrolyte being contained in said tank from said predetermined level to a further predetermined level;

said positive electrode section includes a manifold;

said circulation system includes first and second conduits connected to said manifold and communicating with said tank;

and said manifold and conduits are above said predetermined level.

4. A system in accordance with claim 1 wherein:

said metal is zinc;

said halogen is bromine;

and said oil is a polybromide oil.

5. A method of operating a halogen cell system comprising:

providing a halogen cell including: a negative electrode section comprising a metallic negative electrode; a positive electrode section comprising a positive halogen electrode; said positive electrode section being adapted to receive a halogen electrolyte and a halogen oil;

providing a reservoir for storing a halogen oil;

providing a circulation system which transports halogen electrolyte and halogen oil to and from said positive electrolyte section and communicates with said reservoir;

and providing halogen oil to said system in a volume which is such that when said oil is entirely contained in said reservoir said oil is at a level which is lower than the lowest points of the portions of said circulation system and said positive electrode section which communicate with said oil.

6. A method in accordance with claim 5 wherein:

said metal is zinc;

said halogen is bromine;

and said oil is a polybromide oil.

0116918